# FASCICULE DE BREVET EUROPEEN

(11) **EP 0 779 446 B1**
(45) Date de publication et mention de la délivrance du brevet: **09.03.2005**
(21) Numéro de dépôt: 96402708.0
(22) Date de dépôt: 12.12.1996
(51) Int. Cl.: F16F 1/32, F16D 13/58

(54) **Ensemble élastique unitaire à pièces globalement annulaires et mécanisme d'embrayage comportant un tel ensemble élastique unitaire**
Elastische Einheit mit ringförmigen Elementen und mit einer solchen Einheit ausgerüsteter Kupplungsmechanismus
One-piece, annular elastic unit and clutch mechanism comprising same

(30) Priorité: 14.12.1995 FR 9514862
(43) Date de publication de la demande: 18.06.1997
(73) Titulaire: VALEO EMBRAYAGES s.a.s., 80009 Amiens Cedex 1 (FR)
(72) Inventeur: Thirion de Briel, Jacques, 92700 Colombes (FR)
(74) Mandataire: Lemaire, Marc

(56) Documents cités:
- DE-A- 2 740 915
- DE-A- 4 407 260
- DE-B- 1 198 214
- DE-C- 3 516 152
- DE-C- 19 509 485
- DE-U- 29 508 087
- FR-A- 862 999
- FR-A- 2 096 290
- FR-A- 2 189 658
- FR-A- 2 397 563
- FR-A- 2 580 752
- FR-A- 2 606 108
- FR-A- 2 721 669
- GB-A- 987 086
- GB-A- 2 287 994
- GB-A- 2 296 541
- US-A- 4 602 708
- US-A- 5 088 584

## Description

La présente invention concerne un mécanisme d'embrayage, notamment pour embrayage de véhicules automobiles ; un tel mécanisme d'embrayage comporte une première pièce, dite couvercle, par laquelle il est adapté à être rapporté sur un plateau, dit plateau de réaction, ou volant, et une deuxième pièce, dite plateau de pression, qui est montée mobile axialement par rapport au couvercle tout en étant solidarisée en rotation à celui-ci, les moyens élastiques à action axiale en question intervenant entre ledit couvercle et ledit plateau de pression ; prenant appui, directement ou indirectement, sur le couvercle, ils portent, directement ou indirectement, sur le plateau de pression, en sollicitant ainsi en permanence celui-ci en direction opposée audit couvercle.

La présente invention vise plus particulièrement le cas où les moyens élastiques à action axiale ainsi mis en oeuvre dans un mécanisme d'embrayage comportent un diaphragme, c'est-à-dire une pièce globalement annulaire comportant une partie périphérique circulairement continue, formant rondelle Belleville, et une partie centrale fragmentée en doigts radiaux par des fentes.

Un tel diaphragme, qui constitue par lui-même un ensemble élastique unitaire, est le plus souvent réalisé en métal.

En service, il est l'objet, entre ses appuis, d'une déformation conduisant à une modification de la conicité de sa partie périphérique circulairement continue formant rondelle Belleville, voire même à une inversion de cette conicité.

Quoi qu'il en soit, ce diaphragme, en service exerce axialement une certaine force sur la pièce contre laquelle il porte.

Bien entendu, il s'agit lors de l'opération de débrayage de surmonter cette force.

Diverses solutions ont été prévues jusqu'ici pour assister cette opération de débrayage. En particulier, on a proposé d'associer au diaphragme, en parallèle avec celui-ci, un ressort annulaire monté dans un état tendu de telle sorte que, lors du débrayage, au moins dans une partie de sa course, ledit ressort annulaire produise une force d'assistance au débrayage ; une telle disposition, décrite par exemple dans le document FR-A-2 718 205, fonctionne d'autant mieux qu'un dispositif de rattrapage du jeu dû à l'usure des garnitures de friction et, dans une moindre mesure, des contre-matériaux plateau de réaction et plateau de pression, conduise au maintien, quelle que soit ladite usure, des positions axiales du diaphragme et du ressort annulaire qui travaillent ainsi toujours dans les mêmes conditions.

Malheureusement, dans de telles dispositions connues, par exemple celle selon le document cité ci-dessus, le diaphragme et le ressort annulaire sont des pièces indépendantes et le montage de l'ensemble n'est pas aisé ; de plus, le ressort annulaire est placé de telle sorte qu'il est parfois nécessaire de l'intégrer au moins partiellement dans le dispositif de rattrapage de jeu pour que celui-ci intervienne non seulement pour le maintien de la position du diaphragme mais également pour celle du ressort annulaire.

Le document US 5 088 584 décrit un mécanisme d'embrayage du genre comportant un couvercle par lequel il est adapté à être rapporté sur un plateau de réaction, un plateau de pression monté mobile axialement par rapport au couvercle tout en étant solidarisé en rotation sur celui-ci, pour serrage, entre ce plateau de pression et le plateau de réaction, d'un disque de friction, et des moyens élastiques à action axiale intervenant entre le couvercle et le plateau de pression, prenant appui d'une part sur le couvercle et d'autre part sur le plateau de pression, les moyens élastiques comportant un ensemble élastique unitaire comprenant au moins une pièce globalement annulaire, prenant appui sur le couvercle, du genre diaphragme et formant rondelle Belleville avec une partie centrale fragmentée en doigts radiaux par des fentes, l'ensemble élastique unitaire comportant une deuxième pièce globalement annulaire constituée d'une rondelle annulaire d'assistance agencée au droit de la partie périphérique circulairement continue dudit diaphragme avec laquelle elle est assemblée, ladite rondelle annulaire d'assistance exerçant un effort axial dans le sens opposé à celui du diaphragme pendant une partie au moins de la course de détente de l'ensemble élastique unitaire.

La présente invention a d'une manière générale pour objet une disposition permettant de surmonter de manière très simple ces difficultés.

De manière plus précise, elle a tout d'abord pour objet un ensemble élastique unitaire conforme à la revendication 1.

Avantageusement, ladite rondelle d'assistance exerce un effort axial nul, ou très faible, dans la position comprimée de l'ensemble élastique unitaire où le diaphragme exerce l'effort axial choisi maximale ; en variante ladite rondelle d'assistance exerce un effort axial, dans la position comprimée de l'ensemble élastique unitaire où le diaphragme exerce l'effort axial choisi maximal, qui est dans le même sens que celui exercé par ledit diaphragme.

L'assemblage de la rondelle annulaire d'assistance à la partie périphérique circulairement continue du diaphragme peut être réalisé de diverses manières.

Il est avantageux de réaliser l'assemblage en sorte qu'un léger déplacement transversal relatif entre la rondelle annulaire d'assistance et le diaphragme soit possible en fonctionnement sans qu'il y ait trop de frottement qui risquerait de gêner leur basculement ; en effet, le frottement, s'il y en avait, serait un frottement métal sur métal s'accompagnant inévitablement d'une certaine dissipation d'énergie, au détriment du rendement de l'ensemble, et d'une certaine usure.

Un tel assemblage permet de constituer avantageusement, suivant l'invention, un ensemble élastique unitaire, ce qui en facilite la manipulation, et également le montage au sein d'un équipement, tel qu'un mécanisme d'embrayage, à la constitution duquel il participe ; dans ce cas, le montage est aussi simple que celui d'un diaphragme seul.

Selon une première forme de réalisation, l'assemblage est réalisé par une couche en matière élastique dont chacune des pièces, rondelle annulaire d'assistance et diaphragme, est solidaire ; une telle couche suffit pour assurer le maintien des pièces l'une par rapport à l'autre ainsi que la transmission de couple de l'une à l'autre de ces pièces. La couche en matière élastique peut être adhérisée, par exemple vulcanisée, ou collée sur chacune des pièces, rondelle annulaire d'assistance et diaphragme.

Selon une autre forme de réalisation, l'assemblage est réalisé par un cerclage des deux pièces entre lesquelles a été disposé préalablement un jonc annulaire ; les rebords du cerclage sont munis de retours axiaux introduits dans des ouvertures ménagées dans chacune des pièces. Selon une variante, l'assemblage est réalisé par des cavaliers répartis circonférentiellement.

Selon encore une autre forme de réalisation, l'assemblage est réalisé par des rivets ; les rivets sont des rivets simples ; les rivets sont des rivets épaulés.

La rondelle annulaire d'assistance peut constituer la partie périphérique circulairement continue d'un deuxième diaphragme assemblé au premier diaphragme des mêmes manières que celles décrites ci-dessus, les doigts respectifs des deux diaphragmes étant au droit les uns des autres.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue en coupe d'un mécanisme d'embrayage équipé d'un ensemble élastique unitaire dans la position qu'il occupe lorsque l'embrayage est débrayé ;
- la figure 2 est analogue à la figure 1, l'ensemble élastique unitaire étant dans la position qu'il occupe lorsque l'embrayage est embrayé ;
- la figure 3 représente le mécanisme des figures 1 et 2 à l'état de repos ;
- la figure 4 représente la variation des efforts dus à l'ensemble élastique unitaire des figures 1 à 3, et de ses constituants, en fonction de sa déformation ;
- les figures 5 à 10 montrent des variantes d'ensemble élastique unitaire selon l'invention ;

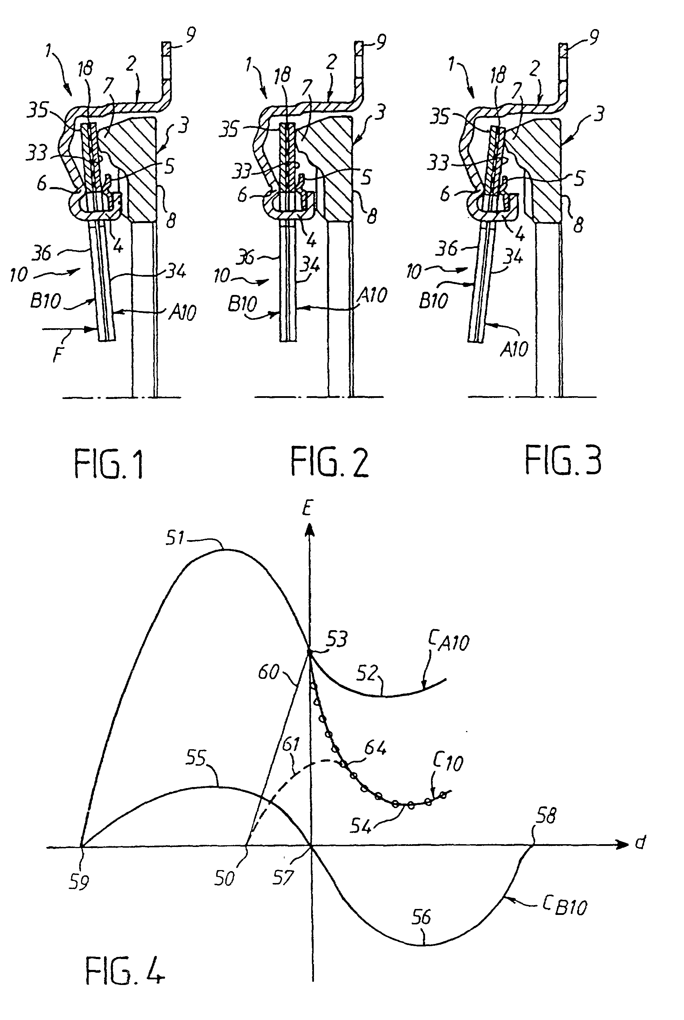

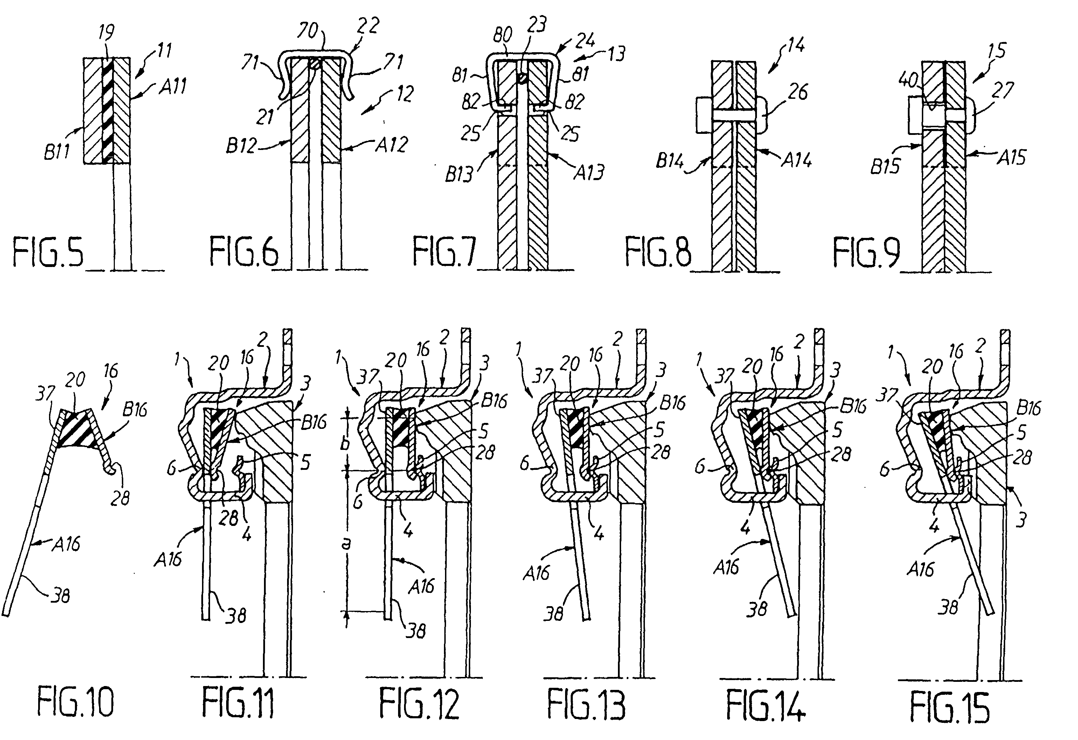

- les figures 1 à 15 montrent diverses positions de l'ensemble élastique unitaire de la figure 10 dans un mécanisme d'embrayage qu'il équipe ;

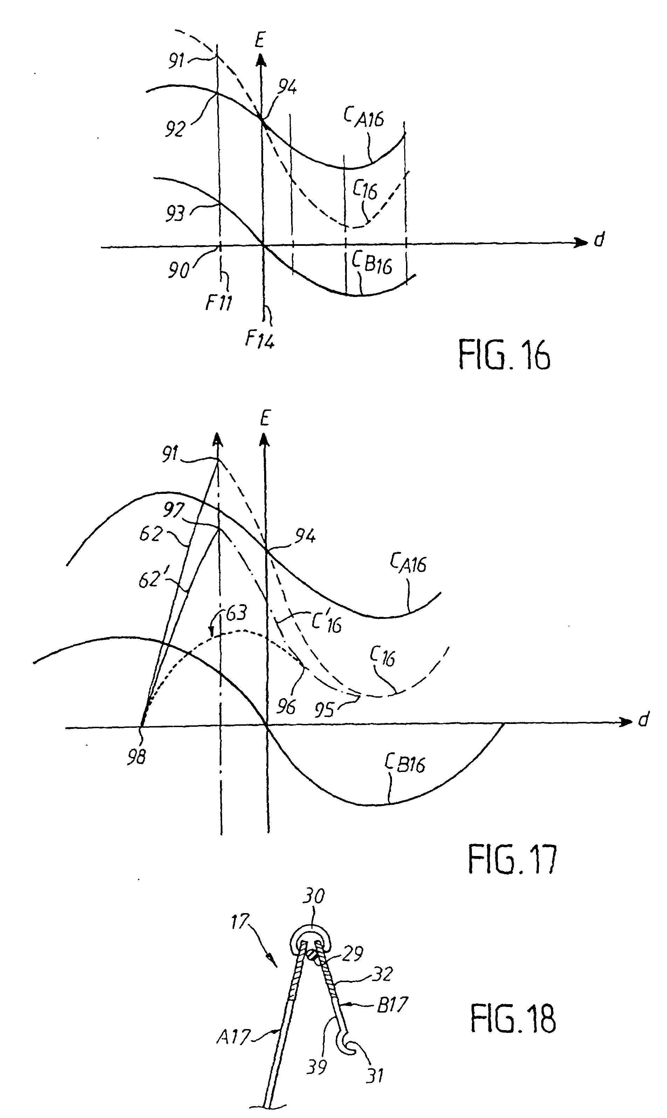

- la figure 16 représente la variation des efforts dus à l'ensemble élastique unitaire de la figure 10, et de ses constituants, en fonction de sa déformation, au droit du cordon d'appui ;
- la figure 17 représente la variation des efforts dus à l'ensemble élastique unitaire de la figure 10, et de ses constituants, en fonction de sa déformation, au droit de la bague de débrayage ;
- la figure 18 est une vue analogue à la figure 10 pour encore un autre exemple de réalisation d'un ensemble élastique unitaire selon l'invention.

En se reportant aux figures 1 à 3, on voit qu'un mécanisme d'embrayage 1 comprend un couvercle 2 par lequel il est adapté à être rapporté sur un plateau, dit plateau de réaction ou volant, grâce à un rebord 9 que présente le couvercle 2, un plateau de pression 3, qui est monté mobile axialement par rapport au couvercle 2 tout en étant solidarisé en rotation sur celui-ci, pour serrage, entre ce plateau de pression 3 et le plateau de réaction, d'un disque de friction, et des moyens élastiques à action axiale qui, prenant appui sur le couvercle 2, portent sur le plateau de pression 3 selon un cordon d'appui 7 que présente celui-ci ; pour simplifier les dessins, le disque de friction et le plateau de réaction, bien connus en soi, ne sont pas représentés.

On notera que le rebord 9 présente des trous pour le passage de vis, non représentées, de fixation du couvercle 2 au plateau de réaction.

Les moyens élastiques à action axiale intervenant entre le couvercle 2 et le plateau de pression 3 comportent un ensemble élastique unitaire 10 simplement formé de deux diaphragmes A10 et B10 séparés l'un de l'autre par une couche en matière élastique 18 dont chacun d'eux est solidaire. Par exemple, la couche 18 est adhérisée, par exemple vulcanisée, ou collée sur les deux diaphragmes A10 et B10.

Chacun des diaphragme A10 et B10 comprend une partie périphérique circulairement continue, formant rondelle Belleville, respectivement 33 et 35, et une partie centrale fragmentée par des fentes en doigts radiaux, respectivement 34 et 36 ; comme on le sait, les doigts 34 et 36 des diaphragmes A10 et B10 constituent des leviers de débrayage propres à une commande en dégagement de l'embrayage sous le contrôle d'une butée de débrayage non représentée.

Dans la forme de réalisation représentée, le mécanisme d'embrayage 1 est du type "poussé", l'action de la butée de débrayage sur les doigts 34, 36 des diaphragmes A10, B10 nécessaire à une telle commande en dégagement se faisant par poussée, c'est-à-dire suivant une direction, tel que montré par la flèche F sur la figure 1, qui tend à éloigner les parties périphériques 33, 35 du plateau de pression 2.

Dans la forme de réalisation représentée, l'ensemble élastique unitaire 10, prenant appui sur le plateau de pression suivant le cordon d'appui 7 de celui-ci, est articulé sur le couvercle 2 entre deux appuis annulaires se faisant face, l'un 6 constitué par une proéminence axiale annulaire du couvercle lui-même, formée par exemple par emboutissage, l'autre par une déformation du même genre d'un anneau 5 retenu par des pattes axiales 4 du couvercle repliées transversalement.

Comme on le sait, la courbe caractéristique d'un diaphragme représentant l'effort axial transmis par le diaphragme en fonction de sa déformation, c'est-à-dire de la course effectuée par l'extrémité de ses doigts déplacée par la butée de débrayage, est une courbe à ensellement qui dépend de l'épaisseur et de la hauteur du tronc de cône de la rondelle Belleville du diaphragme ; la courbe C_{A10} de la figure 4 donne l'effort E du diaphragme A10 en fonction de la course d de l'extrémité de ses doigts 34 ; dans sa position "embrayée" représentée sur la figure 2, le diaphragme A 10 donne un effort d'embrayage choisi à une valeur correspondant au point 53 de la figure 4 ; dans sa position "libre" représentée sur la figure 3, le diaphragme A10 ne transmet pas d'effort : ceci correspondant au point 59 de la figure 4 ; entre les points 59 et 53, l'effort E passe par un maximum 51 ; au delà du point 53, l'effort E passe par un minimum 52 ; c'est l'effort correspondant au tronçon de la courbe C_{A10} s'étendant au delà du point 53 qu'il faut vaincre classiquement au débrayage si le mécanisme d'embrayage ne comportait que le diaphragme A10 seul.

Le diaphragme B10 est choisi, comparativement au diaphragme A10, de telle sorte que sa courbe représentative de E en fonction de d soit la courbe C_{B10} de la figure 4 qui coupe l'axe des abscisses en trois points : le point 59, le point 57 à l'aplomb du point 53 et le point 58 ; entre les points 59 et 57 l'effort E passe par un maximum 55 et entre les points 57 et 58 l'effort E passe par un minimum 56 ; le point 57 correspond à la position du diaphragme B10 qu'il a sur la figure 2, le point 59, celle qu'il a sur la figure 3 ; la position qu'il occupe sur la figure 1 correspond à un point de la courbe C_{B10} voisin du point 56.

L'effort en fonction de d transmis par l'ensemble élastique unitaire 10 est bien entendu globalement la somme des efforts transmis par ses constituants ; sur la figure 4, on a représenté la courbe C₁₀ qui correspond à l'addition des efforts donnés par les courbes C_{A10} et C_{B10} au delà des points 53 et 57, respectivement ; comme on le voit, l'ensemble élastique unitaire 10 selon l'invention permet un effort de débrayage moindre tandis que l'effort axial d'embrayage, point 53, est inchangé.

Le comportement de l'ensemble élastique unitaire 10 qui vient d'être décrit est obtenu avec rigueur lorsque l'embrayage construit à partir du mécanisme 1 est doté d'un dispositif de rattrapage du jeu dû à l'usure des garnitures du disque de friction et, dans une moindre mesure, du plateau de pression et du plateau de réaction ; en effet, grâce audit dispositif de rattrapage, l'ensemble élastique unitaire 10 travaille géométriquement toujours dans les mêmes conditions, quelle que soit cette usure, ainsi donc que les deux diaphragmes A10 et B10 qui le constituent.

Un dispositif de rattrapage de jeu est connu en soi ; il ne sera donc pas décrit ici ; il suffit, si nécessaire, de se reporter par exemple à la demande de brevet français déposée le 21 Septembre 1995 sous le numéro 95 11 090. D'une manière générale, ce dispositif comporte un détecteur d'usure pilotant un moyen à rampes de compensation permettant le maintien du diaphragme dans la même position.

La variation, en fonction de la course de la butée de débrayage, de l'effort de débrayage ne correspond pas rigoureusement à la courbe C₁₀ ; en effet, avant d'atteindre l'effort du point 53, il y a lieu de vaincre des élasticités, comme par exemple celle du couvercle 2, existant tout le long de la chaîne cinématique ; si la course de la butée débute au point 50, ces élasticités à vaincre sont représentées par la courbe 60 ; plus précisément, certains efforts se manifestant également dans le sens du débrayage, comme l'effort de rappel des languettes tangentielles accouplant en rotation plateau de pression 3 et couvercle 2, ou l'effort dû aux moyens de progressivité axiale introduits entre les garnitures de friction, l'effort de débrayage varie globalement de la manière illustrée par la courbe 61 raccordée au point 64 à la courbe C₁₀.

La figure 5 montre un ensemble élastique unitaire 11 dans lequel un diaphragme A11 et une rondelle annulaire d'assistance B11, dépourvue donc de doigts, sont assemblés par une couche en matière élastique 19 dont chacune des pièces est solidaire.

La figure 6 montre un ensemble élastique unitaire 12 dans lequel deux diaphragmes A12 et B12 sont assemblés par un cerclage 22 après qu'un jonc annulaire 21 ait été placé entre les deux diaphragmes A12, B12 au voisinage de leur périphérie externe ; le cerclage 22 comprend une jupe 70 et des rebords 71 rabattus transversalement et serrant axialement le jonc 21 entre les deux diaphragmes A12 et B12.

La figure 7 montre un ensemble élastique unitaire 13 du genre de celui décrit à propos de la figure 6, mais ici les rebords 81 issus de la jupe 80 du cerclage 24 sont munis de retours axiaux 82 en forme de pattes introduits dans des ouvertures 25 ménagées dans chacune des pièces ; là aussi, un jonc annulaire 23 est serré axialement entre les deux diaphragmes A13 et B13 ; avantageusement, les ouvertures 25 ménagées dans les diaphragmes A13 et B13 le sont dans la partie rondelle Belleville desdits diaphragmes, approximativement sur le diamètre médian, dans la ligne neutre, desdites rondelles et au droit, radialement, des axes de symétrie des doigts desdits diaphragmes.

Selon une variante non représentée, l'assemblage est réalisé par des cavaliers répartis circonférentiellement dont la section est analogue à la section des cerclages représentés sur les figures 6 et 7.

Les figures 8 et 9 montrent des ensembles élastiques unitaires 14 et 15, respectivement assemblés par des rivets ; selon la figure 8, les diaphragmes A14 et B14 de l'ensemble 14 sont assemblés par des rivets 26 classiques ; selon la figure 9, les diaphragmes A15 et B15 de l'ensemble 15 sont assemblés par des rivets 27 épaulés, le corps des rivets 27 sur lequel est prévu l'épaulement étant monté avec un jeu 40 à travers le diaphragme B15. Dans ces deux variantes, les rivets sont placés dans un endroit similaire à celui des ouvertures 25 de la variante précédente selon la figure 7.

L'ensemble élastique unitaire 16 de la figure 10 comprend un diaphragme A16, ayant une partie 37 formant rondelle Belleville et des doigts 38 ; une rondelle annulaire d'assistance B16 est assemblée avec la rondelle 37 du diaphragme A16 par un anneau en matière élastique 20 dont chacune des deux pièces est solidaire.

L'ensemble élastique unitaire 16 est représenté sur la figure 10 à l'état libre ; on remarquera que le diaphragme A16 et la rondelle annulaire d'assistance B16 sont à conicités opposées.

Les courbes caractéristiques du diaphragme A16 et de la rondelle annulaire d'assistance B16 sont montrées sur la figure 16, respectivement C_{A16} et C_{B16}, la courbe C₁₆ correspondant à l'ensemble élastique unitaire 16 ; sur cette figure, les lignes verticales repérées F11 est F14 montrent les points de fonctionnement des éléments dans la position qu'ils occupent respectivement sur les figures 11 et 14 ; ainsi, sur la figure 11, qui correspond à l'état embrayé de l'embrayage, l'extrémité des doigts 38 du diaphragme A16, au droit de la bague de débrayage, étant dans la position repérée 90, l'effort d'embrayage correspond à l'ordonnée du point 91, étant la somme des efforts correspondant aux ordonnées des points 92 et 93, car, selon cette variante, la rondelle d'assistance B16 participe également à l'effort d'embrayage 3 : on peut voir en effet sur la figure 11 que, dans cette position, où l'anneau en matière élastique 20 est comprimé, les conicités du diaphragme A16 et de la rondelle B16 sont dans le même sens ; bien que cela soit peu visible à l'échelle de la figure, le diaphragme A16 n'est, sur cette figure, pas encore plan, c'est-à-dire que sa trace n'est pas encore verticale.

Comme on le voit également sur cette figure 11, un jeu axial existe entre l'appui couvercle constitué par la proéminence 6 et l'anneau 5.

Sur la figure 12, le diaphragme A16 et la rondelle B16 sont plans, la distance axiale entre l'appui couvercle constitué par la proéminence 6 et l'appui sur l'anneau 5 étant prévue pour qu'il en soit ainsi, la rondelle d'assistance B16 ayant basculé jusqu'à coopérer en butée avec l'anneau 5 par une rainure annulaire 28 qu'elle présente à sa périphérie interne qui a une forme complémentaire de cette de l'appui de l'anneau 5 ; dans la position de la figure 12, l'effort axial de l'ensemble élastique unitaire 16, point 94, n'est dû qu'au diaphragme A16 ; il est à noter que jusque là les bras de levier d"articulation" de l'ensemble élastique unitaire 16 sont a et b tels que repérés sur la figure 12. Dans cette position, la compression de l'anneau en matière élastique 20 est partiellement relâchée.

En poursuivant l'action sur la butée de débrayage, le diaphragme A16 quitte l'appui couvercle 6 en direction de l'anneau 5; pendant ce déplacement, au cours duquel l'anneau en matière élastique 20 est comprimé à nouveau, l'effort à la butée de débrayage, représenté sur la figure 17, est moindre car les bras de levier de l'ensemble élastique 16 sont alors b et a + b ; il est représenté par le point 97 sur cette figure. Sur la figure 14, le diaphragme A16 a retrouvé l'appui sur l'anneau 5, par l'intermédiaire de la périphérie interne de la rondelle d'assistance B16, toujours plane ; dans ces conditions, les bras de levier de l'ensemble élastique unitaire 16 sont à nouveau a et b.

C'est à partir de la position de la figure 14 que l'opération de débrayage proprement dite commence avec assistance par la rondelle annulaire d'assistance B16, l'effort de débrayage étant représenté à la figure 17 par la courbe C'₁₆ qui se raccorde en 95 à la courbe C₁₆. Compte tenu des élasticités évoquées précédemment, le segment 62 correspond à la courbe 60 de l'exemple précédent, devenu 62' après changement des bras de levier, et la courbe 63, qui se raccorde en 96 à la courbe C'₁₆, correspondant à la courbe 61 de l'exemple précédent ; l'action de la butée de débrayage commence au point 98 analogue au point 50 précédent.

Sur la figure 15, l'embrayage est complètement débrayé.

La figure 18 montre une variante d'ensemble élastique unitaire 17 du genre de l'ensemble 16 précédent : l'anneau en matière élastique a été remplacé par un cerclage 30 de section semi circulaire emprisonnant élastiquement un jonc 29 entre un diaphragme A17 et un autre diaphragme B17 à rondelle type Belleville 32 prolongée par des doigts 39, plus courts que ceux du diaphragme A17 ; l'extrémité des doigts 39 est conformée en sorte de présenter une creusure 31 apte à s'adapter avec la déformation annulaire, servant d'appui, de l'anneau 5 du mécanisme.

Bien entendu, le diaphragme B10 peut être choisi de telle sorte que sa courbe caractéristique coupe l'axe des abscisses en un point voisin du point 57.

Dans tous les cas, il est possible de former un sous-ensemble unitaire comportant la rondelle annulaire d'assistance et le diaphragme. Cet ensemble est manipulable et transportable sans risque d'erreur en ce qui concerne le choix de la rondelle d'assistance contrairement à une solution ou on assemble tout en final. Il est possible de tester par avance le sous-ensemble unitaire rondelle d'assistance - diaphragme. L'effort de débrayage est faible en sorte qu'un actionneur à moteur électrique de faible puissance peut agir sur le diaphragme pour désengager l'embrayage en poussant.

## Revendications

1. Mécanisme d'embrayage du genre comportant un couvercle (2) par lequel il est adapté à être rapporté sur un plateau, dit plateau de réaction ou volant, un plateau de pression (3) monté mobile axialement par rapport au couvercle (2) tout en étant solidarisé en rotation sur celui-ci, pour serrage, entre ce plateau de pression (3) et le plateau de réaction, d'un disque de friction, et des moyens élastiques à action axiale intervenant entre le couvercle (2) et le plateau de pression (3), prenant appui d'une part sur le couvercle (2) et d'autre part sur le plateau de pression (3),les moyens élastiques étant du type comportant un ensemble élastique unitaire (11-17) du genre comportant au moins une pièce globalement annulaire, prenant appui sur le couvercle (2), du genre diaphragme (A11-A17), c'est-à-dire une pièce globalement annulaire comportant une partie périphérique circulairement continue (37), formant rondelle Belleville, et une partie centrale (38) fragmentée en doigts radiaux par des fentes, l'ensemble élastique unitaire comportant une deuxième pièce globalement annulaire (B11-B17) constituée d'au moins une rondelle annulaire d'assistance, ladite rondelle annulaire d'assistance étant agencée au droit de la partie périphérique circulairement continue (37) dudit diaphragme (A11-A17) avec laquelle elle est assemblée, ladite rondelle annulaire d'assistance exerçant un effort axial dans le sens opposé à celui du diaphragme (A11-A17) pendant une partie au moins de la course de détente de l'ensemble élastique unitaire (11-17), **caractérisé par le fait que** l' ensemble élastique unitaire ne prend appui sur le plateau de pression (3) que à travers la rondelle élastique d'assistance.

2. Mécanisme d'embrayage selon la revendication 1, **caractérisé par le fait que** ladite rondelle d'assistance exerce un effort axial nul, ou très faible, dans la position comprimée de l'ensemble élastique unitaire (11-15) où le diaphragme (A11-A15) exerce l'effort axial choisi maximal.

3. Mécanisme d'embrayage selon la revendication 1, **caractérisé par le fait que** ladite rondelle d'assistance exerce un effort axial, dans la position comprimée de l'ensemble élastique unitaire (16, 17) où le diaphragme (A16, A17) exerce l'effort axial choisi maximal, qui est dans le même sens que celui exercé par ledit diaphragme (A16, A17).

4. Mécanisme d'embrayage selon l'une des revendications 1 à 3, **caractérisé par le fait que** l'assemblage de la rondelle annulaire d'assistance (B11, B16) et du diaphragme (A11, A16) est réalisé par une couche en matière élastique (19, 20) dont chacune des pièces est solidaire.

5. Mécanisme d'embrayage selon l'une des revendications 1 à 3, **caractérisé par le fait que** l'assemblage de la rondelle annulaire d'assistance (B12, B13) et du diaphragme (A12, A13) est réalisé par un cerclage (22, 23, 30) des deux pièces entre lesquelles a été disposé préalablement un jonc annulaire (21, 23, 29).

6. Mécanisme d'embrayage selon la revendication 5, **caractérisé par le fait que** les rebords (81) du cerclage (24) sont munis de retours (82) introduits dans des ouvertures (25) ménagées dans chacune des pièces.

7. Mécanisme d'embrayage selon l'une des revendications 1 à 3, **caractérisé par le fait que** l'assemblage est réalisé par des cavaliers répartis circonférentiellement.

8. Mécanisme d'embrayage selon l'une des revendications 1 à 3, **caractérisé par le fait que** l'assemblage de la rondelle annulaire d'assistance (B17) et du diaphragme (A17) est réalisé par des cavaliers élastiques (30) répartis circonférentiellement, un jonc (29) étant placé périphériquement entre les deux pièces.

9. Mécanisme d'embrayage l'une des revendications 1 à 3, **caractérisé par le fait que** l'assemblage de la rondelle annulaire (B14, B15) et du diaphragme (A14, A15) est réalisé par des rivets (26, 27).

10. Mécanisme d'embrayage selon la revendication 9, **caractérisé par le fait que** les rivets (27) sont épaulés.

11. Mécanisme d'embrayage selon l'une des revendications 1 à 10, **caractérisé par le fait que** la rondelle annulaire d'assistance constitue la partie périphérique circulairement continue d'un deuxième diaphragme (B12 - B15, B17) assemblé au diaphragme ou premier diaphragme (A12 - A15, A17).

12. Mécanisme d'embrayage selon l'une quelconque des revendications précédentes, **caractérisé en ce qu'**il est doté d'un dispositif de rattrapage de jeu dû à l'usure des garnitures que comporte le disque de friction.

## Patentansprüche

1. Kupplungsmechanismus, mit einem Deckel (2), durch den er zum Anbringen an einer Platte, der so genannten Gegendruckplatte oder dem so genannten Schwungrad, ausgeführt ist, eine Druckplatte (3), die bezüglich des Deckels (2) axial beweglich angebracht ist, wobei sie drehfest daran befestigt ist, um zwischen dieser Druckplatte (3) und der Gegendruckplatte eine Reibscheibe festzuklemmen, und axial wirkende elastische Mittel, die zwischen dem Deckel (2) und der Druckplatte (3) wirken und sich dabei einerseits am Deckel (2) und andererseits an der Druckplatte (3) abstützen, wobei die elastischen Mittel jener Art sind, die eine eine Einheit bildende elastische Anordnung (11 - 17) jener Art aufweisen, die mindestens ein sich am Deckel (2) abstützendes allgemein ringförmiges Teil nach Art einer Membranfeder (A11 - A17) aufweist, das heißt ein allgemein ringförmiges Teil, das einen kreisförmig durchgehenden Umfangsbereich (37), der eine Tellerfeder bildet, und einen durch Schlitze in radiale Finger aufgeteilten Zentralbereich (38) aufweist, wobei die eine eine Einheit bildende elastische Anordnung ein zweites allgemein ringförmiges Teil (B11 - B17) aufweist, das aus mindestens einer ringförmigen Hilfsfeder besteht, welche im Bereich des kreisförmig durchgehenden Umfangsbereichs (37) der Membranfeder (A11 - A17) angeordnet ist, mit der sie zusammengefügt ist, wobei die ringförmige Hilfsfeder während zumindest eines Teils des Entspannungswegs der eine Einheit bildenden elastischen Anordnung (11 - 17) in der der Richtung der Membranfeder (A11 - A17) entgegengesetzten Richtung eine Axialkraft ausübt, **dadurch gekennzeichnet, dass** sich die eine Einheit bildende elastische Anordnung nur durch die elastische Hilfsfeder an der Druckscheibe (3) abstützt.

2. Kupplungsmechanismus nach Anspruch 1, **dadurch gekennzeichnet, dass** die Hilfsfeder in komprimierter Stellung der eine Einheit bildenden elastischen Anordnung (11 - 15), in der die Membranfeder (A11 - A15) die gewählte maximale Axialkraft ausübt, eine Axialkraft von gleich Null oder eine sehr geringe Axialkraft ausübt.

3. Kupplungsmechanismus nach Anspruch 1, **dadurch gekennzeichnet, dass** die Hilfsfeder in der komprimierten Stellung der eine Einheit bildenden elastischen Anordnung (16, 17), in der die Membranfeder (A16, A17) die gewählte maximale Kraft ausübt, eine Axialkraft ausübt, die in der gleichen Richtung verläuft wie die durch die Membranfeder (A16, A17) ausgeübte.

4. Kupplungsmechanismus nach einem der Ansprüche 1 bis 3, **dadurch gekennzeichnet, dass** das Zusammenfügen der ringförmigen Hilfsfeder (B11, B16) und der Membranfeder (A11, A16) durch eine Schicht (19, 20) aus elastischem Material erfolgt, mit dem jedes der Teile fest verbunden ist.

5. Kupplungsmechanismus nach einem der Ansprüche 1 bis 3, **dadurch gekennzeichnet, dass** das Zusammenfügen der ringförmigen Hilfsfeder (B12, B13) und der Membranfeder (A12, A13) durch eine Umreifung (22, 23, 30) der beiden Teile erfolgt, zwischen denen zuvor ein Sprengring (21, 23, 29) angeordnet worden ist.

6. Kupplungsmechanismus nach Anspruch 5, **dadurch gekennzeichnet, dass** die Ränder (81) der Umreifung (24) mit Rücksprüngen (82) versehen sind, die in in jedem der Teile ausgebildeten Öffnungen (25) eingeführt sind.

7. Kupplungsmechanismus nach einem der Ansprüche 1 bis 3, **dadurch gekennzeichnet, dass** das Zusammenfügen durch um den Umfang verteilte Klammern erfolgt.

8. Kupplungsmechanismus nach einem der Ansprüche 1 bis 3, **dadurch gekennzeichnet, dass** das Zusammenfügen der ringförmigen Hilfsfeder (B17) und der Membranfeder (A17) durch um den Umfang verteilte elastische Klammern (30) erfolgt, wobei ein Sprengring (29) umfangsmäßig zwischen den beiden Teilen angeordnet ist.

9. Kupplungsmechanismus nach einem der Ansprüche 1 bis 3, **dadurch gekennzeichnet, dass** das Zusammenfügen der ringförmigen Feder (B14, B15) und der Membranfeder (A14, A15) durch Nieten (26, 27) erfolgt.

10. Kupplungsmechanismus nach Anspruch 9, **dadurch gekennzeichnet, dass** die Nieten (27) mit Schultern versehen sind.

11. Kupplungsmechanismus nach einem der Ansprüche 1 bis 10, **dadurch gekennzeichnet, dass** die ringförmige Hilfsfeder den kreisförmig durchgehenden Umfangsbereich einer zweiten Membranfeder (B12 - B15, B17) bildet, die an der Membranfeder oder ersten Membranfeder (A12 - A15, A17) angefügt ist.

12. Kupplungsmechanismus nach einem der vorhergehenden Ansprüche, **dadurch gekennzeichnet, dass** er mit einer Vorrichtung zur Nachstellung des auf den Verschleiß der Beläge, mit denen die Reibscheibe versehen ist, zurückzuführenden Spiels versehen ist.

## Claims

1. Clutch mechanism of the type comprising a cover (2) by means of which it can be attached to a plate, referred to as a reaction plate or flywheel, a pressure plate (3) mounted to move axially with respect to the cover (2) while being secured in rotation to the latter, in order to hold a friction disc between this pressure plate (3) and the reaction plate, and axial-action elastic means between the cover (2) and the pressure plate (3) bearing on the one hand against the cover (2) and on the other hand against the pressure plate (3), the elastic means being of the type comprising a unitary elastic assembly (11-17) of the type comprising at least one generally annular part, bearing against the cover (2), of the diaphragm (A11-A17) type, that is to say a generally annular part comprising a continuous circular peripheral part (37), forming a Belleville washer, and a central part (38) that is fragmented into radial fingers by slots, the unitary elastic assembly comprising a second generally annular part (B11-B17) consisting of at least one annular assistance ring, said annular assistance ring being arranged to the right of the continuous circular peripheral part (37) of said diaphragm (A11-A17) with which it is assembled, said annular assistance ring exerting an axial force in the opposite direction to that of the diaphragm (A11-A17) during at least part of the expansion stroke of the unitary elastic assembly (11-17), **characterized in that** the unitary elastic assembly bears against the pressure plate (3) only via the elastic assistance ring.

2. Clutch mechanism according to Claim 1, **characterized in that** said assistance ring exerts a zero, or very small, axial force in the compressed position of the unitary elastic assembly (11-15) in which the diaphragm (A11-A15) exerts the selected maximum axial force.

3. Clutch mechanism according to Claim 1, **characterized in that** said assistance ring exerts an axial force, in the compressed position of the unitary elastic assembly (16, 17) in which the diaphragm (A16, A17) exerts the selected maximum axial force, which is in the same direction as that exerted by said diaphragm (A16, A17).

4. Clutch mechanism according to one of Claims 1 to 3, **characterized in that** the annular assistance ring (B11, B16) and the diaphragm (A11, A16) are assembled by a layer of elastic material (19, 20), to which each of the parts is secured.

5. Clutch mechanism according to one of Claims 1 to 3, **characterized in that** the annular assistance ring (B12, B13) and the diaphragm (A12, A13) are assembled by strapping (22, 23, 30) the two parts together, between which two parts an annular seal (21, 23, 29) has been placed beforehand.

6. Clutch mechanism according to Claim 5, **characterized in that** the edges (81) of the strap (24) are provided with returns (82) which are introduced into openings (25) made in each of the parts.

7. Clutch mechanism according to one of Claims 1 to 3, **characterized in that** the parts are assembled by staples distributed around the circumference.

8. Clutch mechanism according to one of Claims 1 to 3, **characterized in that** the annular assistance ring (B17) and the diaphragm (A17) are assembled by elastic staples (30) distributed around the circumference, a seal (29) being placed peripherally between the two parts.

9. Clutch mechanism according to one of Claims 1 to 3, **characterized in that** the annular ring (B14, B15) and the diaphragm (A14, A15) are assembled by rivets (26, 27).

10. Clutch mechanism according to Claim 9, **characterized in that** the rivets (27) are provided with shoulders.

11. Clutch mechanism according to one of Claims 1 to 10, **characterized in that** the annular assistance ring forms the continuous circular peripheral part of a second diaphragm (B12 - B15, B17) assembled to the diaphragm or first diaphragm (A12 - A15, A17).

12. Clutch mechanism according to any one of the preceding claims, **characterized in that** it is equipped with a device for taking up slack due to wear of the linings on the friction disc.
